(19) Europäisches Patentamt
European Patent Office
Office européen des brevets

(11) **EP 4 130 750 A1**

(12) **EUROPEAN PATENT APPLICATION**
published in accordance with Art. 153(4) EPC

(43) Date of publication:
**08.02.2023 Bulletin 2023/06**

(21) Application number: **21774504.1**

(22) Date of filing: **27.01.2021**

(51) International Patent Classification (IPC):
*G01N 35/02* (1980.01)

(52) Cooperative Patent Classification (CPC):
**G01N 35/02**

(86) International application number:
**PCT/JP2021/002796**

(87) International publication number:
**WO 2021/192585 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.03.2020 JP 2020058361**

(71) Applicant: **Kyocera Corporation
Kyoto-shi Kyoto 612-8501 (JP)**

(72) Inventors:
• **NISHIZONO, Kazuhiro
Kyoto-shi, Kyoto 612-8501 (JP)**
• **ONISHI, Koji
Kyoto-shi, Kyoto 612-8501 (JP)**
• **IKEDA, Yutaka
Kyoto-shi, Kyoto 612-8501 (JP)**

(74) Representative: **TBK
Bavariaring 4-6
80336 München (DE)**

(54) **INSPECTION SYSTEM, CARTRIDGE, INSPECTION METHOD, AND INSPECTION DEVICE**

(57) A simple configuration is used to make a determination of suitability of a cartridge including a case where the cartridge is unused. An examination system (1) includes a cartridge (2) to which identification information is assigned and an examination device (3) that acquires the identification information and performs an examination. The examination system (1) makes a determination of suitability of the cartridge based on the identification information and controls an operation of the examination device in accordance with a result of the determination.

FIG. 1

**Description**

TECHNICAL FIELD

The present disclosure relates to an examination system, a cartridge, an examination method, and an examination device.

BACKGROUND OF INVENTION

To date, in an examination device or examination system for detecting an examination subject contained in a sample, an appropriate cartridge is required to be attached to the examination device in order to obtain an appropriate examination result (see, for example, Patent Document 1).

CITATION LIST

PATENT LITERATURE

Patent Document 1: JP 2013-186097 A

SUMMARY

PROBLEM TO BE SOLVED

In such an examination device or examination system, the suitability of a cartridge for use in the examination device, including a case where the cartridge is unused, needs to be appropriately determined.

SOLUTION TO PROBLEM

An examination system according to one aspect of the present disclosure includes a cartridge to which identification information is assigned and an examination device configured to acquire the identification information and perform an examination, makes a determination of suitability of the cartridge based on the identification information, and controls an operation of the examination device according to a result of the determination.

An examination method according to one aspect of the present disclosure is an examination method in an examination system including an examination device for performing an examination using a cartridge to which identification information is assigned, and includes acquiring the identification information from the cartridge, making a determination of suitability of the cartridge based on the identification information, and controlling an operation of the examination device in accordance with a result of the determination.

An examination device according to one aspect of the present disclosure is an examination device for performing an examination using a cartridge to which identification information is assigned, and includes a connector to be connected to the cartridge, a reader configured to read the identification information, and a controller configured to control an operation in accordance with a result of a determination of suitability of the cartridge based on the identification information.

An examination system according to one aspect of the present disclosure includes a cartridge to which identification information is assigned and an examination device configured to acquire the identification information and perform an examination, and specifies a measurement condition in the examination device based on the identification information.

An examination method according to one aspect of the present disclosure is an examination method in an examination system including an examination device for performing an examination using a cartridge to which identification information is assigned, and includes acquiring the identification information from the cartridge. specifying a measurement condition in the examination device based on the identification information, and controlling an operation of the examination device in accordance with the measurement condition.

An examination device according to one aspect of the present disclosure is an examination device for performing an examination using a cartridge to which identification information is assigned, and includes a connector to be connected to the cartridge, a reader configured to read the identification information, and a controller configured to control an operation in accordance with a measurement condition specified based on the identification information.

ADVANTAGEOUS EFFECT

According to the invention according to the present disclosure, a simple configuration can be used to determine the suitability of a cartridge for use in an examination device, even when the cartridge is unused.

BRIEF DESCRIPTION OF THE DRAWINGS

FIG. 1 is a block diagram illustrating a configuration of an examination system according to an embodiment.
FIG. 2 is a diagram illustrating the appearance of an examination device and a cartridge provided in the examination system according to the embodiment.
FIG. 3 is a plan view illustrating a configuration of a sensor of the examination device according to the embodiment.
FIG. 4 is a flowchart showing an example of a flow of processing performed in the examination device according to the embodiment.
FIG. 5 is a flowchart showing an example of a flow of processing performed in a portable terminal according to the embodiment.
FIG. 6 is a block diagram illustrating a configuration of an examination system according to another embodiment.
FIG. 7 is a flowchart showing an example of a flow of processing performed in the examination device according to the embodiment.
FIG. 8 is a block diagram illustrating a configuration of an examination system according to another embodiment.
FIG. 9 is a block diagram illustrating a configuration of an examination system 1C according to another embodiment.
FIG. 10 is an example of a table containing items contained in identification information of the cartridge.

DESCRIPTION OF EMBODIMENTS

First Embodiment

Configuration of Examination System 1

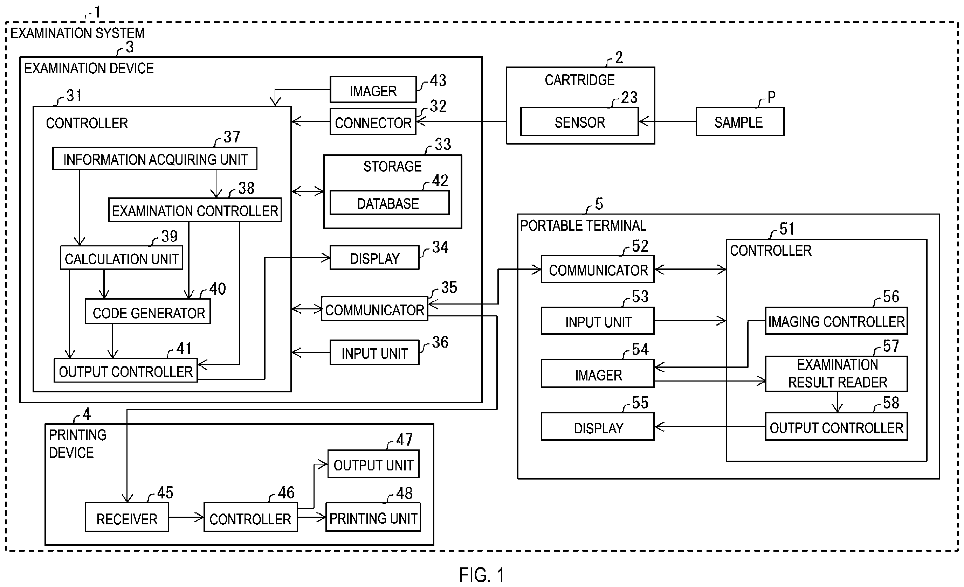

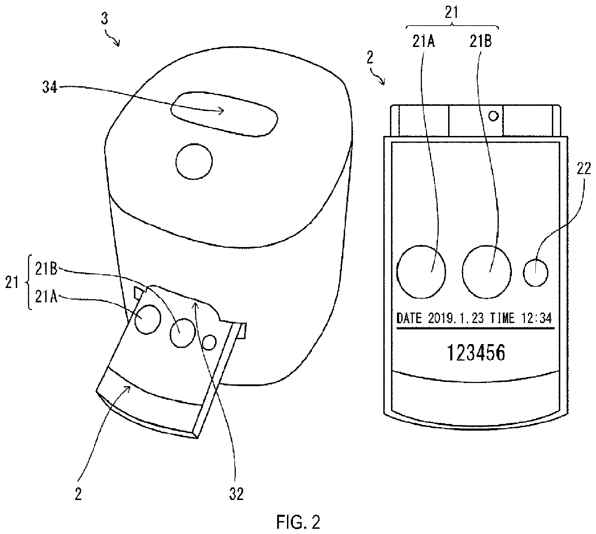

An embodiment of the invention according to the present disclosure will be described in detail below. FIG. 1 is a block diagram illustrating a configuration of an examination system 1 according to the embodiment. FIG. 2 is a diagram illustrating the appearance of an examination device 3 and a cartridge 2 provided in the examination system 1 according to the embodiment. Note that in the examination device 3 illustrated in FIG. 2, the cartridge 2 is not completely attached to the examination device 3. In other words, FIG. 2 illustrates the cartridge 2 in a process of being inserted into the examination device 3.

In the embodiment, the examination system 1 is a system capable of performing an examination of an examination subject contained in a sample P, and presenting a result of the examination to an operator of the examination device 3 and a client who requested the examination. In the embodiment, the examination system 1 includes the cartridge 2, the examination device 3, a printing device 4, and a portable terminal (mobile terminal) 5. In the examination system 1, when the cartridge 2 is connected to the examination device 3, the examination device 3 may determine whether the cartridge 2 is appropriate. The examination device 3 may output a result of the determination. The examination device 3 may start an examination of the sample P using the cartridge 2 when the cartridge 2 is determined to be appropriate. In other words, the cartridge 2 may be used for authentication for the examination device 3 to start the examination. The examination device 3 may display an examination result of the examination.

Hereinafter, in this specification, as an example of the examination system 1, a configuration will be described in which urine is used as the sample P and a concentration of an examination subject contained in the sample P is measured. Note that the examination system 1 may be applied specifically to the examination of tumor markers for various cancers, viruses such as influenza, bacteria, or substances for examining specific diseases (e.g., hemoglobin A1c in the case of diabetes). In other words, the examination system 1 may be used for, for example, quantitative analysis, such as measurement of the concentration of the examination subject contained in the sample P, or qualitative analysis for specifying a type of a substance or the like contained in the sample P.

The examination system 1 may be used for, for example, diagnosing a physiological tendency or a disease of a subject based on the examination result. The result of the examination system 1 may be, for example, the presence or absence of a virus or a concentration of a specific substance (cholesterol, etc.) in the blood. Alternatively, based on the aforementioned, the result of the examination system 1 may be, for example, the diagnosis of a physiological tendency or a disease of a subject. The physiological tendency may be, for example, a tendency related to the constitution of the subject, such as whether the subject is prone to producing a certain substance, whether the subject is prone to a certain disease, and whether the subject is prone to serious illness when suffering from a certain disease.

The result of the examination system 1 may be a result of combining the result examined by the examination device 3 with physiological information of the subject and the like. The examination result derived by the examination device 3 may be, for example, physiological information obtained by attaching the examination device 3 to the subject. Examples of the physiological information may include blood pressure, a heart rate, a pulse wave, blood oxygen concentration, blood viscosity, an echo image, and an X-ray image. The examination result may also include the result of an examination performed on a subject such as a human or an animal. Specifically, the result of the examination system 1 may be, for example, the degree of growth of a fetus determined based on a result of combining the examination result derived by the examination device 3 and an echo image obtained by performing an echo examination on the mother as a subject. The result of the examination system 1 may be a bone density estimated based on a result of combining the examination result derived by the examination device 3 and an X-ray image obtained by X-ray imaging of a patient as a subject. In these cases, the examination system 1 does not necessarily need to use the cartridge 2. That is, the examination device 3 may, for example, take examination data from another examination device and perform further examination based on the examination data. Physiological information may be obtained from the examination device 3 and another examination device, database, or the like. For example, the examination device 3 may be wired or wirelessly connected to another examination device, database, or the like by a conventionally known method.

The examination device 3 may be any examination device as long as it uses a replaceable cartridge 2. A plurality of types of cartridges 2 may be prepared depending on the types of examination. That is, the type of examination performed by the examination device 3 is not limited. For example, the sample P is not limited to urine mentioned as an example, and may be any substance of biological origin, such as blood, sweat, saliva, or nasal discharge. The cartridge 2 may be appropriately configured such that the examination device 3 can detect these samples P.

Configuration of Cartridge 2

The cartridge 2 may be a disposable cartridge that can be attached to and detached from the examination device 3. In the embodiment, the cartridge 2 includes a holding section 21 that holds a liquid, a liquid receiving section 22 that takes the sample P into the inside of the cartridge 2, and a sensor 23 (measurement device) that detects an examination subject contained in the sample P. A flow path (not illustrated) is formed inside the cartridge 2. The flow path may be connected to the holding section 21 and the liquid receiving section 22. That is, the sample P and the liquid held in the holding section 21 may be supplied to the flow path. For example, the sample P and the liquid may be mixed in the flow path. For example, the sample P supplied to the flow path may be washed away by the liquid held in the holding section 21. The flow path may be formed by a conventionally known technique.

The cartridge 2 may be made of, for example, resin. Examples of the resin may include polycarbonate, cycloolefin polymer, polymethyl methacrylate resin, and polydimethylsiloxane. In the embodiment, the cartridge 2 is made of polymethyl methacrylate resin.

The cartridge 2 can input and output electrical signals to and from the examination device 3. That is, the cartridge 2 and the examination device 3 may be electrically connectable. Terminals or the like that electrically connect the cartridge 2 and the examination device 3 may be manufactured by a conventionally known method.

Note that the cartridge 2 does not have to be physically attached to the examination device 3. For example, the cartridge 2 may include a communicator capable of communicating with the examination device 3. In this case, the cartridge 2 may transmit and receive various kinds of information, such as electrical signals related to the examination, to and from the examination device 3 by wired or wireless communication.

Identification information may be assigned to the cartridge 2. The identification information may include product identification information, which is information for identifying each cartridge 2. The product identification information may be, for example, a manufacturing number (serial number) of the cartridge 2. The identification information may also include examination information, which is information utilized by the examination device 3 for performing an examination using the cartridge 2. For example, the examination information may be information of a type of examination (including information of the examination subject) and/or information of conditions according to the type of examination (e.g., reaction temperature and reaction time).

A code indicating identification information (e.g., bar code or QR code (registered trademark)) may be affixed or printed on the cartridge 2. In this case, the examination device 3 can acquire the identification information from the code by reading the code affixed to a housing of the cartridge 2.

Note that the identification information may be encrypted. That is, the code affixed or printed on the cartridge 2 may be generated based on the encrypted identification information. The encryption method is not limited, but may be, for example, encryption with a private key. In the manufacturing process, the identification information may be encrypted with the private key, and the encrypted identification information may be encoded (e.g., in a bar code, or QR code (registered trademark)). This makes it possible to generate a code containing the encrypted identification information. The private key used for encryption may be stored in advance in a storage 33 of the examination device 3, or may be acquired by the examination device 3 from an external device.

In the cartridge 2, the position where the code is affixed or printed is not limited. For example, when the cartridge 2 is heated by the examination device 3, the code may be affixed or printed at a position away from a portion of the cartridge 2 to be heated. In other words, the code may be affixed or printed at a position where heat is less likely to be transferred than other portions of the cartridge 2. For example, when a lower surface of the cartridge 2 is heated, the code may be affixed or printed on an upper surface of the cartridge (a surface opposite the surface to be heated). In this case, the likelihood of the code disappearing or fading due to heat during or after examination is reduced. Thus, the examination system 1 can determine the suitability of the cartridge during or after the examination. The examination system 1 may reduce code reading errors by the examination device 3. That is, in the embodiment, the cartridge 2 may reduce malfunctions of the examination device 3. Note that the code may be made of, for example, ink that is less likely to disappear by heat. Alternatively, the code may be made of, for example, ink that changes color at a temperature higher than the temperature at which the cartridge 2 is heated.

For example, when the cartridge 2 is heated by the examination device 3, the code may be affixed or printed at a position close to a portion of the cartridge 2 to be heated. That is, the code may be affixed or printed on the cartridge 2 at a position where heat is more easily transferred than other portions. For example, when a lower surface of the cartridge 2 is heated, the code may be affixed or printed on the lower surface of the cartridge 2 (the same surface as the surface to be heated). In this case, the examination device 3 can erase or fade the code by heat. Accordingly, the likelihood that the cartridge 2 once used in the examination device 3 will be reused in the same examination device 3 or another examination device 3 can be reduced. That is, in the embodiment, the cartridge 2 may reduce malfunction of the examination device 3. Note that the code may be made of, for example, ink that disappears or fades with heat. The heating of the cartridge 2 (heating of the code) may be performed after the determination of the suitability of the cartridge 2. Specifically, the heating of the cartridge 2 (heating of the code) may be performed before the examination, at the same time as the examination, or after the examination.

However, the identification information may be assigned to the cartridge 2 through another aspect. For example, a chip in which identification information is recorded may be embedded in the cartridge 2 in advance. The chip may be configured by a well-known technique. For example, a memory such as a solid state drive (SSD) may be used. In this case, the identification information of the chip in the cartridge 2 is read directly or indirectly (without contact) by the examination device 3. Specifically, the examination device 3 may be provided with a reader capable of being electrically connected to the inside of the cartridge 2. The reader may acquire the identification information from the chip when electrically connected to the cartridge 2. Note that the chip may be destroyed by any method after the determination of the suitability of the cartridge 2 or after the completion of the examination. For example, the examination device 3 may electrically destroy the chip by a short circuit or the like. Alternatively, for example, the examination device 3 may physically destroy the chip with a tool such as a drill provided in the device. Further, for example, the examination device 3 may write information to the chip to indicate that the chip has been used, and may control the chip so that the examination result is not output when the examination device 3 reads the information.

The holding section 21 can hold various liquids. That is, various liquids are sealed inside the holding section 21. The holding section 21 may be made of any material depending on the type of liquid used for the examination. For example, when a liquid easily oxidized is sealed, the holding section 21 may be made of a material having low oxygen permeability. For example, when an acidic liquid is used, the holding section 21 may be made of an acid-resistant material. Thus, the holding section 21 may be made of, for example, aluminum, polypropylene, or polyethylene. In the embodiment, the holding section 21 is made of polypropylene. Note that the holding section 21 may be formed by a conventionally known method such as casting.

The holding section 21 is not limited to a specific shape as long as the holding section 21 can hold the liquid. The holding section 21 may be any shape, for example, a truncated pyramid, such as a truncated cone, a truncated triangular pyramid, or a truncated quadrangular pyramid, a pyramid, such as a cone, a triangular pyramid, or a quadrangular pyramid, or a prism, such as a cylinder, a triangular prism, or a quadrangular prism, or a combination thereof. In the embodiment, the holding section 21 is a truncated cone. The holding section 21 may be pressed down by a rod (not illustrated) of the examination device 3 to supply the liquid held by the holding section 21 to the sensor 23.

The liquid receiving section 22 can take the sample P into the cartridge 2 and supply it to the sensor 23. That is, the liquid receiving section 22 is connected to the flow path of the cartridge 2. The shape of the liquid receiving section 22 is not limited. The liquid receiving section 22 may be formed integrally with the flow path of the cartridge 2. Alternatively, the liquid receiving section 22 may be formed separately from the flow path of the cartridge 2. The liquid receiving section 22 may be formed by a conventionally known technique.

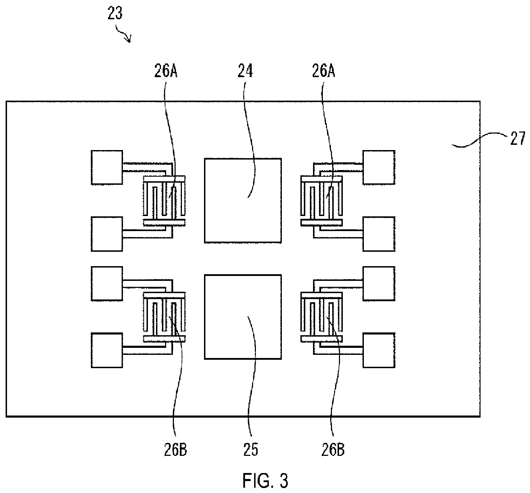

FIG. 3 is a plan view illustrating a configuration of the sensor 23. In the embodiment, the sensor 23 is a sensor that utilizes an elastic wave, and includes a detection section 24, a reference section 25, a pair of first inter digital transducer (IDT) electrodes 26A, a pair of second IDT electrodes 26B, and a substrate 27. The detection section 24, the reference section 25, the pair of first IDT electrodes 26A, and the pair of second IDT electrodes 26B may be located on the substrate 27.

The sensor 23 may be a sensor that utilizes, for example, an elastic wave, a quartz crystal microbalance (QCM), surface plasmon resonance (SPR), or a field effect transistor (FET). That is, the sensor 23 may convert an electrical signal and the elastic wave, the QCM, the SPR, the FET, or the like into each other. Note that the sensor 23 may be manufactured by a conventionally known method. In the embodiment, the sensor 23 is a sensor that utilizes the elastic wave. That is, the sensor 23 can convert the electrical signal and the elastic wave into each other. In this case, the examination information contained in the identification information may include information specific to the sensor utilizing the elastic wave, such as the initial phase of the elastic wave and the orientation of the substrate 27.

A substance (reactant) that reacts with the examination subject may be fixed in the detection section 24. Thus, the examination subject contained in the sample P can react with the reactant in the detection section 24. The detection section 24 may be made of, for example, metal. Specifically, the detection section 24 may be made of a metal such as gold, chromium, titanium, or a combination of these metals. The detection section 24 may be a single-layer metal film made of a single material or a multi-layer metal film made of a plurality of materials. Note that the detection section 24 is not limited to these metals as long as it can fix the reactant. That is, the detection section 24 may be made of any material capable of fixing the reactant. The detection section 24 may be manufactured by a conventionally known method.

The reactant may be, for example, an antibody, an enzyme, or the like. That is, the examination subject may be an antigen, a substrate, or the like. Note that the examination subject is not limited to these examples. For example, the examination subject may be an antibody or an enzyme. That is, the reactant may be, for example, an antigen or a substrate. In other words, the combination of the examination subject and the reactant may be selected as appropriate according to the symptom, disease, or the like to be examined by the examination device 3.

The pair of first IDT electrodes 26A can generate elastic waves between the pair of first IDT electrodes 26A. Of the generated elastic waves, an elastic wave propagating on the surface of the substrate 27 is also referred to as a surface acoustic wave (SAW). The pair of first IDT electrodes 26A may be positioned on the substrate 27 so as to sandwich the detection section 24. In the sensor 23 according to the embodiment, an electrical signal is input to one of the pair of first IDT electrodes 26A under the control of the examination device 3. The input electrical signal is converted into an elastic wave propagating toward the detection section 24 and is transmitted from one of the first IDT electrodes 26A. The transmitted elastic wave passes through the detection section 24. The other of the first IDT electrodes 26A can receive the elastic wave passed through the detection section 24. The received elastic wave is converted into an electrical signal. The converted electrical signal is output to the examination device 3. The pair of first IDT electrodes 26A may be made of a metal such as gold, chromium, or titanium, or a combination thereof. The pair of first IDT electrodes 26A may be a single-layer electrode made of a single material or a multi-layer electrode made of a plurality of materials.

In the detection section 24, the propagation characteristic of the elastic wave propagating on the substrate 27 is changed by reaction between the examination subject and the reactant. Specifically, the reaction between the examination subject and the reactant changes the weight applied to the substrate 27 or the viscosity of the liquid in contact with the surface of the substrate 27. The sizes of these changes correlate to the amount of reaction between the examination subject and the reactant. The characteristic of the elastic wave (e.g., phase, amplitude, or period) changes with the propagation of the elastic wave through the detection section 24. The magnitude of the change in the characteristic correlates with the magnitude of the weight applied to the substrate 27 or the magnitude of the viscosity of the liquid in contact with the surface of the substrate 27. Thus, the examination device 3 can detect the examination subject based on the change in the characteristic of the elastic wave using the sensor 23. Specifically, the examination device 3 can measure, for example, the concentration of the examination subject contained in the sample P.

Note that the sensor 23 may include two or more combinations of the detection section 24 and the pair of IDT electrodes 26A. In this case, the examination device 3 may detect, for example, different types of target substances for the respective combinations. Alternatively, the examination device 3 may detect, for example, a plurality of combinations of the same type of target substance and compare the respective detection results.

Unlike the detection section 24, no reactant is fixed in the reference section 25. That is, in the reference section 25, reaction between the examination subject and the reactant does not occur. Thus, the reference section 25 can function as a control of the detection section 24. The reference section 25 may be formed identical or similar to the detection section 24.

The pair of second IDT electrodes 26B can generate an elastic wave between the pair of second IDT electrodes 26B. The pair of second IDT electrodes 26B may be positioned on the substrate 27 so as to sandwich the reference section 25. In the sensor 23 according to the embodiment, an electrical signal is input to one of the pair of second IDT electrodes 26B under the control of the examination device 3. The input electrical signal is converted into an elastic wave propagating toward the reference section 25 and is transmitted from one of the second IDT electrodes 26B. The transmitted elastic wave passes through the reference section 25. The other of the second IDT electrodes 26B can receive the elastic wave passed through the reference section 25. The received elastic wave is converted into an electrical signal. The converted electrical signal is output to the examination device 3. The pair of second IDT electrodes 26B may be configured identical or similar to the pair of first IDT electrodes 26A.

The substrate 27 is, for example, a substrate having piezoelectricity. Specifically, the substrate 27 is, for example, a quartz substrate. Note that the substrate 27 is not limited to the quartz substrate as long as it can propagate elastic waves. That is, the substrate 27 may be made of any material capable of propagating elastic waves. The substrate 27 may be manufactured by a conventionally known method.

Configuration of Examination Device 3

The examination device 3 includes a controller 31, a connector 32, the storage 33, a display 34 (display device), a communicator 35, and an input unit 36. The controller 31 includes an information acquiring unit 37, an examination controller 38, a calculation unit 39, a code generator 40, and an output controller 41. The storage 33 may include a database 42.

The information acquiring unit 37 may acquire the identification information from the cartridge 2. The information acquiring unit 37 may output the identification information to the examination controller 38 and the calculation unit 39. For example, when the code is printed on the cartridge 2, the information acquiring unit 37 can read the various types of information from an image obtained by capturing the code. The information acquiring unit 37 can acquire the identification information again when the cartridge 2 is replaced.

The database 42 may include the identification information of the cartridge 2. When the examination controller 38 acquires the identification information of the cartridge 2 from the information acquiring unit 37, the examination controller 38 may refer to the database 42 in the storage 33 and collate the identification information of the cartridge 2 with the identification information registered in the database 42. Thus, the examination controller 38 can determine the suitability of the cartridge 2. The examination controller 38 may operate in accordance with a result of the determination. In other words, the examination controller 38 controls the operation of the examination device in accordance with the result of the determination. Note that the examination controller 38 may execute a determination program for making a determination stored in the storage 33 in advance, thereby making the determination. When the operator of the examination device 3 performs input to start the examination, the examination controller 38 may control the examination environment of the cartridge 2 based on the information of the examination conditions contained in the examination information.

For example, the examination controller 38 may determine whether the cartridge 2 is an appropriate product by collating the product identification information of the cartridge 2 contained in the database 42 with the product identification information contained in the identification information assigned to the cartridge 2.

When the code containing encrypted identification information is affixed to the cartridge 2, the information acquiring unit 37 reads the code upon connection of the cartridge 2 to the examination device 3. The examination controller 38 decrypts the encrypted identification information contained in the read code by the private key stored in the storage 33. If decryption with the private key fails, the examination controller 38 may determine that the cartridge 2 is not an appropriate product. In other words, the examination controller 38 may determine whether the cartridge 2 is an appropriate product by determining whether the encrypted identification information can be decrypted with the private key. If decryption with the private key is successful, the examination controller 38 may assume that the cartridge 2 is an appropriate product and start the examination, or may collate the decrypted identification information with the product identification information of the database 42 to make further determination of appropriateness.

Examples of an appropriate product include exclusive products used for an examination by the examination device 3, products approved by certification bodies based on laws (e.g., Act on Securing Quality, Efficacy and Safety of Products Including Pharmaceuticals and Medical Devices in Japan) or genuine products manufactured through a regular route. In other words, the examination controller 38 may determine that the cartridge 2 is appropriate if the cartridge 2 is an appropriate product such as an exclusive product or a genuine product.

The examination controller 38 may determine that the cartridge 2 is not appropriate if the cartridge 2 is an exclusive product used for another examination or a product other than an appropriate product such as a counterfeit product manufactured through a non-regular route. The examination device 3 may start the examination if the examination controller 38 determines that the cartridge 2 is appropriate. If the examination controller 38 determines that the cartridge 2 is not appropriate, the examination controller 38 may output the determination result to the output controller 41 without starting the examination, and display an indication on the display 34 prompting the replacement of the cartridge 2.

For example, the examination controller 38 may determine whether the cartridge 2 matches a type of the examination by collating the examination information contained in the database 42 with the examination information contained in the identification information assigned to the cartridge 2. In other words, the examination controller 38 may determine whether the cartridge 2 can be used for the examination by the examination device 3. That is, the examination controller 38 may determine that the cartridge 2 is appropriate if the cartridge 2 can be used for the examination by the examination device 3. The examination controller 38 may determine that the cartridge 2 is not appropriate if the cartridge 2 cannot be used for the examination by the examination device 3. For example, the examination controller 38 may determine that the cartridge 2 is not appropriate when the cartridge 2 is an appropriate product but for an examination different from the examination performed by the examination device 3 (e.g., when the cartridge 2 is for examining influenza virus but the examination device 3 is for examining the blood glucose level). The examination controller 38 may determine that the cartridge 2 is appropriate if the cartridge 2 can be used for the examination by the examination device 3. The examination device 3 may start the examination if the examination controller 38 determines that the cartridge 2 is appropriate. If the examination controller 38 determines that the cartridge 2 is not appropriate, the examination controller 38 may output the determination result to the output controller 41 without starting the examination, and display an indication on the display 34 prompting the replacement of the cartridge 2.

Note that the examination device 3 may periodically update the identification information included in the database 42. For example, when the examination system 1 is connected to a network, the examination device 3 may update the identification information via the network. The examination device 3 may update the identification information included in the database 42 each time the examination controller 38 determines the cartridge 2. In that case, the examination device 3 updates the identification information of the database 42 before the determination. For example, the identification information may be updated by connecting an external device such as a universal serial bus (USB) that stores new identification information to the examination device 3. In this case, the examination device 3 may appropriately include a port for connecting the external device. The examination device 3 can acquire new examination items, new cartridges, new authentication algorithms, and the like by periodically updating the identification information. That is, the examination system 1 can improve convenience when using the examination system 1.

When the calculation unit 39 acquires the electrical signal from the sensor 23, the calculation unit 39 may calculate the concentration of the examination subject as an examination result. The calculation unit 39 may output the calculated examination result to the code generator 40 and the output controller 41.

The code generator 40 may acquire the examination result from the calculation unit 39, and generate a code (e.g., QR code (registered trademark) or bar code) indicating the examination result. The code generator 40 may output the generated code to the output controller 41.

The output controller 41 controls various outputs of the examination device 3. Specifically, when the output controller 41 acquires the determination result of the suitability of the cartridge 2 from the examination controller 38, the output controller 41 may display the determination result on the display 34. When the output controller 41 acquires the examination result from the calculation unit 39, the output controller 41 may display the examination result on the display 34. The output controller 41 may output the code acquired from the code generator 40 and the examination result to the printing device 4 via the communicator 35. Note that the output controller 41 may display the examination result on the display 34.

The connector 32 may be connected to the cartridge 2 to exchange various types of information. Specifically, the connector 32 may be, for example, a communication module for wireless or wired communication, or a mechanism (terminals) that electrically connects the examination device 3 and the cartridge 2 by attaching the cartridge 2 to the connector 32, allowing information to be exchanged by electrical signals. When the connector 32 is the communication module, the connector 32 can function as a reader that reads the identification information of the cartridge 2.

The storage 33 may store the database 42 in advance. The database 42 may be a database about the identification information of the appropriate cartridge 2. The database 42 may store information for specifying the identification information of the cartridge 2 that is available for use, or information for specifying the identification information of the cartridge 2 that cannot be used (e.g., a cartridge 2 that has been used once). The storage 33 may store a determination program for determining the suitability of the cartridge 2. The storage 33 may store information such as a calculation equation and calibration curve data used by the calculation unit 39 for calculation.

When the code indicating information such as identification information is printed on the cartridge 2, the examination device 3 may further include an imager 43 (camera) as a reader that reads the code attached to the cartridge 2.

Configuration of Printing Device 4

The printing device 4 includes a receiver 45, a controller 46, an output unit 47, and a printing unit 48. The controller 46 of the printing device 4 may acquire the examination result and the code indicating the examination result via the receiver 45. The controller 46 may control the output unit 47 to output a medium such as paper. The controller 46 may control the printing unit 48 to print the examination result and the code on the medium output from the output unit 47.

Configuration of Portable Terminal 5

The portable terminal 5 is a mobile terminal device that acquires the code indicating the examination result and displays the examination result indicated by the code. The portable terminal 5 is a general-purpose portable information processing terminal device, such as a smartphone or a tablet terminal, but the type thereof is not limited. The portable terminal 5 includes a controller 51, a communicator 52, an input unit 53, an imager 54, and a display 55.

The controller 51 includes an imaging controller 56, an examination result reader 57, and an output controller 58. The imaging controller 56 may activate the imager 54 when an input for activating the imager 54 is performed from the input unit 53. The imaging controller 56 may control the imager 54 according to the input from the input unit 53 to capture an image of the code printed by the printing device 4.

The examination result reader 57 may acquire an image of the code captured by the imager 54. The examination result reader 57 can analyze the image of the code and read the examination result contained in the code. After acquiring the examination result from the examination result reader 57, the output controller 58 may control the display 55 to display the examination result.

The input unit 53 is an input device configured to receive an input from the operator of the examination device 3, and may be, for example, a touch panel. The imager 54 is a digital camera capturing an image under the control of the imaging controller 56. The display 55 is a display device that displays the examination result. For example, the touch panel, which is the input unit 53, may also serve as the display 55.

Example of Processing Flow of Examination Device

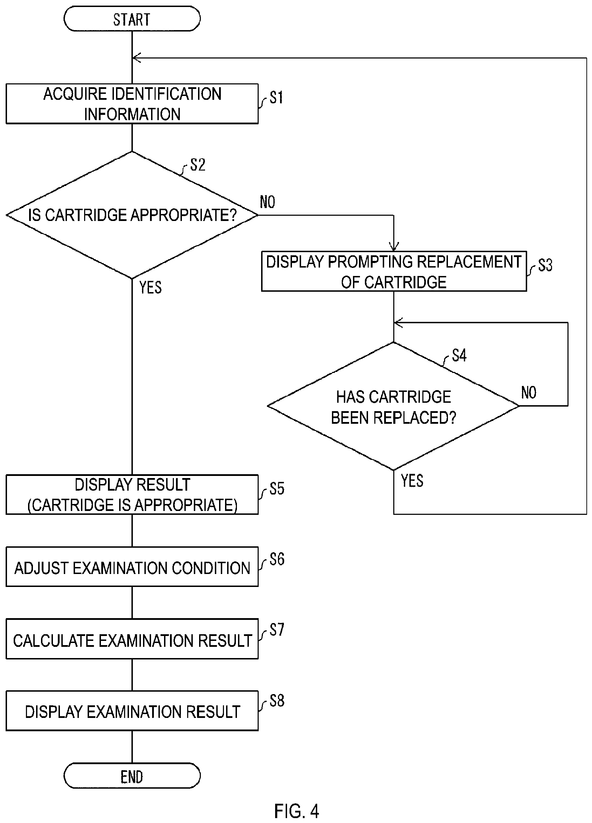

FIG. 4 is a flowchart showing an example of a flow of processing performed in the examination device 3. First, when the cartridge 2 is connected to the connector 32 of the examination device 3, the information acquiring unit 37 acquires the identification information assigned to the cartridge 2 via the connector 32 (S 1). The information acquiring unit 37 outputs the identification information to the examination controller 38 and the calculation unit 39.

When the examination controller 38 acquires the identification information, the examination controller 38 refers to the database 42 in the storage 33 to determine the suitability of the cartridge 2 (S2). Specifically, when the identification information of the cartridge 2 is registered in the database 42 as the identification information of the appropriate cartridge 2, the examination controller 38 determines that the cartridge 2 is an appropriate cartridge.

The examination controller 38 operates in accordance with the determination result. Specifically, if the cartridge 2 is determined not to be an appropriate cartridge (NO in S2), the examination controller 38 displays the determination result of the determination and a message prompting the replacement of the cartridge 2 on the display 34 via the output controller 41 (S3).

If the cartridge 2 is replaced (YES in S4), after returning to S1, the information acquiring unit 37 acquires the identification information of the cartridge 2 again (S 1), and the examination controller 38 determines the suitability of the cartridge 2 again (S2).

On the other hand, if the cartridge 2 is determined to be an appropriate cartridge (YES in S2), the examination controller 38 outputs the determination result to the output controller 41. When the output controller 41 acquires the determination result, the output controller 41 controls the display 34 to display a screen indicating that the cartridge 2 attached to the examination device 3 is appropriate as the determination result and a screen prompting the start of the examination (S5).

After S5, when the operator of the examination device 3 performs an operation to start the examination using the input unit 36, the examination is started in the examination device 3. The examination controller 38 controls the cartridge 2 based on the examination information, and adjusts the examination conditions (S6). Specifically, the examination controller 38 controls the rod of the examination device 3 to press down the holding section 21 of the cartridge 2 and supply the liquid (sample P) held by the holding section 21 to the sensor 23. The sample P is supplied to the sensor 23 from the liquid receiving section 22 via the flow path. The examination controller 38 adjusts the temperature of the cartridge 2 so as to be a temperature suitable for the examination. The examination controller 38 sets the reaction time of the sample P on the sensor 23. The examination controller 38 then controls the sensor 23 to generate an elastic wave.

The calculation unit 39 acquires the examination information contained in the identification information from the information acquiring unit 37, and an electrical signal indicating the elastic wave from the sensor 23. The calculation unit 39 refers to the storage 33 to acquire information necessary for calculation for acquiring an examination result, such as a calculation equation according to the type of examination indicated by the examination information. The calculation unit 39 calculates the concentration of the examination subject as the examination result based on the information necessary for calculation and the electrical signal of the elastic wave (S7).

For example, the calculation unit 39 can detect the examination subject based on the electrical signal (detection signal) based on the elastic wave that has passed through the detection section 24, using the electrical signal (reference signal) based on the elastic wave that has passed through the reference section 25 as a reference. Specifically, when the sample P contains the examination subject, a difference is generated between the detection signal and the reference signal due to the reaction between the examination subject and the reactant. Thus, for example, the calculation unit 39 can detect the examination subject by taking a difference between the detection signal and the reference signal. The calculation unit 39 outputs the calculated examination result to the code generator 40 and the output controller 41.

When the code generator 40 acquires the examination result, the code generator 40 may generate a code indicating the examination result. The code generator 40 may output the generated code to the output controller 41.

When the output controller 41 acquires the examination result from the calculation unit 39, the output controller 41 controls the display 34 to display the examination result (S8). When the output controller 41 acquires the examination result and the code indicating the examination result, the output controller 41 outputs the examination result to the printing device 4 via the communicator 35.

When the controller 46 of the printing device 4 acquires the examination result and the code indicating the examination result from the examination device 3 via the receiver 45, the controller 46 controls the output unit 47 and the printing unit 48 to print and output the examination result and the code on a medium such as paper.

Processing Flow of Portable Terminal 5

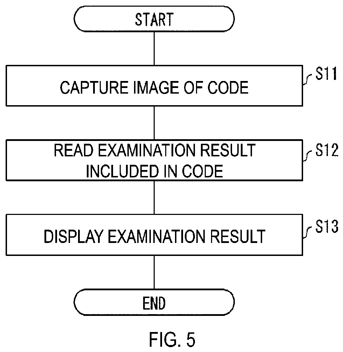

FIG. 5 is a flowchart showing an example of a flow of processing performed in the portable terminal 5. The imaging controller 56 of the portable terminal 5 activates the imager 54 in response to an input from a user (a client who requested the examination) to capture an image of a code printed on the medium such as paper (S 11). The examination result reader 57 acquires an image of the code and reads the information (examination result) indicated by the code (S12). The examination result reader 57 outputs the read examination result to the output controller 58. When the output controller 58 acquires the examination result, the output controller 58 controls the display 55 to display the examination result (S13).

Note that the examination device 3 may transmit the examination result directly to the communicator 52 of the portable terminal 5 via the communicator 35. In this case, the processes S11 to S13 may be omitted.

Effect of Examination System 1

In the embodiment, the examination system 1 includes the cartridge 2 to which identification information is assigned and the examination device 3 for performing an examination using the cartridge 2. The examination device 3 can acquire the identification information of the cartridge 2, and make a determination regarding the suitability of the cartridge 2 based on the identification information before the examination is started. According to the above configuration, by reading the identification information assigned to the cartridge 2, a determination of the suitability of the cartridge 2 may be made before a series of examinations is started. Thus, the suitability of the cartridge 2 can be determined by a simple configuration.

In the embodiment, the cartridge 2 includes the sensor 23 that detects an examination subject contained in the sample P. The determination in the examination device 3 may be made before the sample P is supplied to the sensor 23. With the above configuration, since the suitability of the cartridge 2 is determined before the start of operations for the series of examinations, operations for an inappropriate examination can be suppressed from being performed.

The examination system 1 includes the printing device 4 that acquires a result of the examination from the examination device 3, and prints the result of the examination and a code indicating the result of the examination on a medium. The portable terminal 5 included in the examination system 1 includes the imager 54 that reads the printed code. The examination system 1 can display the examination result on the display 55 of the portable terminal 5 based on the code read by the imager 54.

In the above configuration, the code indicating the examination result is printed, so that a doctor or the like can hand the examination result to a client as paper. The client can input and display the examination result on the portable terminal 5 by reading the code using the portable terminal 5.

The examination device 3 may include the display 34 that displays information. The output controller 41 may display the result of the examination regarding the examination subject on the display 34. According to the above configuration, an operator of the examination device 3 can be informed of the result of the examination.

Variations

In the first embodiment described above, the determination result of the suitability of the cartridge 2 is displayed only in the examination device 3. However, in the examination system 1, the examination device 3 may transmit the determination result to the portable terminal 5, and the portable terminal 5 may display the determination result on the display 55.

In this case, the examination controller 38 may determine the suitability of the cartridge 2 and then transmit the result of the determination to the communicator 52 of the portable terminal 5 via the communicator 35. When the controller 51 of the portable terminal 5 acquires the result of the determination, the controller 51 may control the display 55 to display the result of the determination.

This makes it possible to inform the client, who is the owner of the portable terminal 5, whether the examination has been performed using the proper cartridge 2.

The identification information of the cartridge 2 may include specific information specifying the examination device 3 that corresponds to the cartridge 2 (that can use the cartridge 2). In this case, the examination controller 38 may determine that the cartridge 2 is appropriate when the cartridge 2 is used in the examination device 3 corresponding to the specific information of the cartridge 2. The examination device 3 may start the examination when the cartridge 2 is appropriate. That is, in the embodiment, the examination system 1 may start the examination when the cartridge 2 is used in the examination device 3 corresponding to the specific information.

Specifically, the information acquiring unit 37 may acquire the specific information contained in the identification information of the cartridge 2 and output the specific information to the examination controller 38. The examination controller 38 may determine whether the examination device indicated by the acquired specific information is the device to which the examination controller 38 itself belongs (appropriate examination device) by comparing the specific information with the identification information of the device to which the examination controller 38 itself belongs. The examination controller 38 may determine the suitability of the cartridge 2 based on the identification information of the cartridge 2. If the examination device 3 is an appropriate examination device and the identification information of the cartridge 2 indicates that the cartridge 2 is appropriate, the examination may be started. On the other hand, if the examination device 3 is not an appropriate examination device, or the identification information of the cartridge 2 indicates that the cartridge 2 is not appropriate, the examination controller 38 may display an indication prompting the replacement of the cartridge 2 without starting the examination.

An expiration date of the cartridge 2 may be recorded in advance in the database 42 in the storage 33. In other words, for example, the examination controller 38 may determine whether the cartridge 2 is being used within the expiration date by collating the expiration date of the cartridge 2 contained in the database 42 with the expiration date contained in the identification information assigned to the cartridge 2. That is, the examination controller 38 may determine whether the cartridge 2 can be used for the examination. Specifically, the examination controller 38 may refer to the database 42 to acquire information about the expiration date of the cartridge 2. The examination controller 38 may then determine whether the expiration date has passed. The examination controller 38 may determine that the cartridge 2 is suitable for the examination if the cartridge 2 has not expired at the time of examination. The examination controller 38 may determine that the cartridge 2 is not suitable if the cartridge 2 has expired at the time of examination. If the examination controller 38 determines that the cartridge 2 is suitable for the examination, the examination device 3 may start the examination. If the examination controller 38 determines that the cartridge 2 is not suitable for the examination, the examination controller 38 may display an indication on the display 34 prompting the replacement of the cartridge 2 without starting the examination. Note that the expiration date may be, for example, the manufacturer's guaranteed expiration date or recommended expiration date for use in the cartridge 2.

Alternatively, the examination controller 38 may determine whether the cartridge 2 is suitable based on the expiration date contained in the identification information assigned to the cartridge 2. In this case, the information acquiring unit 37 may acquire information about the expiration date of the cartridge 2 and output it to the examination controller 38. When the examination controller 38 acquires the information about the expiration date, the examination controller 38 may determine whether the cartridge 2 has expired. The examination controller 38 may determine that the cartridge 2 is suitable if the cartridge 2 has not expired at the time of examination. The examination controller 38 may determine that the cartridge 2 is not suitable if the cartridge 2 has expired at the time of examination. If the examination controller 38 determines that the cartridge 2 is suitable for the examination, the examination device 3 may start the examination. If the examination controller 38 determines that the cartridge 2 is not suitable for the examination, the examination controller 38 may display an indication on the display 34 prompting the replacement of the cartridge 2 without starting the examination.

When the cartridge 2 is appropriate, the examination device 3 may start the examination without receiving a start operation from the input unit 36 by the operator. According to the above configuration, the time from attaching the cartridge 2 to displaying the examination result can be shortened.

The examination device 3 may communicate with an external management server that manages the database 42 via the communicator 35 to update the database 42. This allows the database 42 to be kept up to date. The communication may be performed periodically, or may be performed when the user performs an input indicating an update.

The examination information may include information necessary for calculation such as a calculation equation and calibration curve data. In this case, after acquiring the examination information and the electrical signal, the calculation unit 39 can calculate the examination result using the information contained in the examination information without referring to the storage 33.

The examination system 1 may include a display device including a display in addition to the display 34 included in the examination device 3. In this case, the examination device 3 may display a determination result of the suitability of the cartridge 2 or various examination results on the display device.

Second Embodiment

Another embodiment of the present invention according to the present disclosure will be described below. Note that, for convenience of description, members having the same functions as the members described in the first embodiment are denoted by the same reference signs, and descriptions thereof will not be repeated. The same applies to other embodiments.

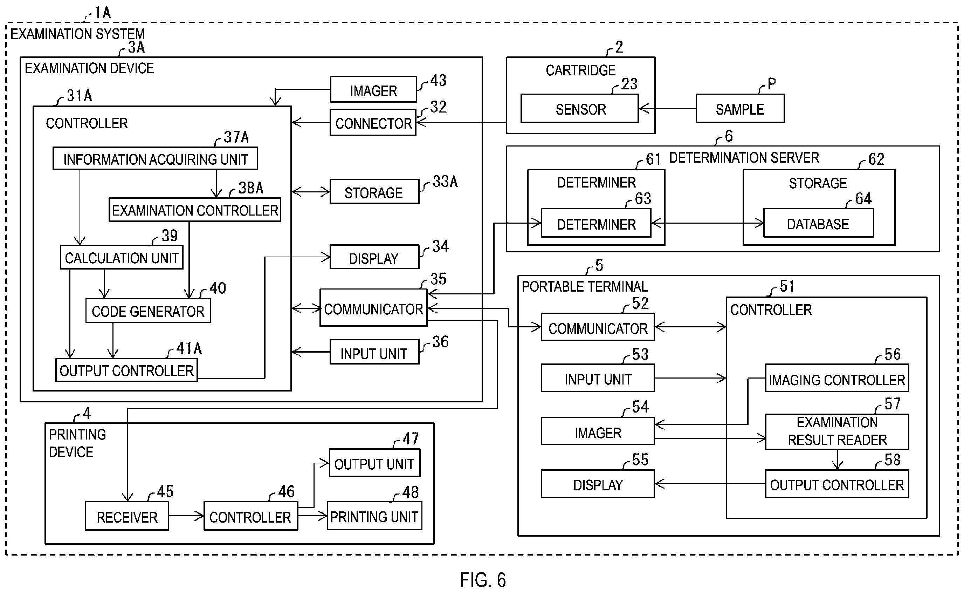

FIG. 6 is a block diagram illustrating a configuration of an examination system 1A according to the other embodiment. The examination system 1A differs from the examination system 1 in that the examination system 1A includes a determination server (management device) 6. An examination device of the examination system 1A is referred to as an examination device 3A.

In the examination system 1A, an examination controller 38A does not make a determination of the suitability of a cartridge 2, and the determination may be made by the determination server 6. Thus, an information acquiring unit 37A may transmit the acquired identification information to the determination server 6 via a communicator 35. An output controller 41A can acquire a determination result from the determination server 6 via the communicator 35. The output controller 41A may control a display 34 to display a screen in accordance with the acquired determination result.

The determination server 6 may receive the identification information of the cartridge 2 from the examination device 3A via a communicator (not illustrated) and determine the suitability of the cartridge 2. The determination server 6 includes a controller 61 and a storage 62. The controller 61 includes a determiner 63. The determiner 63 may receive the identification information from the examination device 3A and execute a determination program to make a determination of the suitability of the cartridge 2. The determiner 63 may transmit a result of the determination to the examination device 3A. The determination program and a database 64 may be stored in advance in the storage 62. The database 64 may be a database that is the same as or similar to the database 42.

Example of Processing Flow of Examination Device 3A

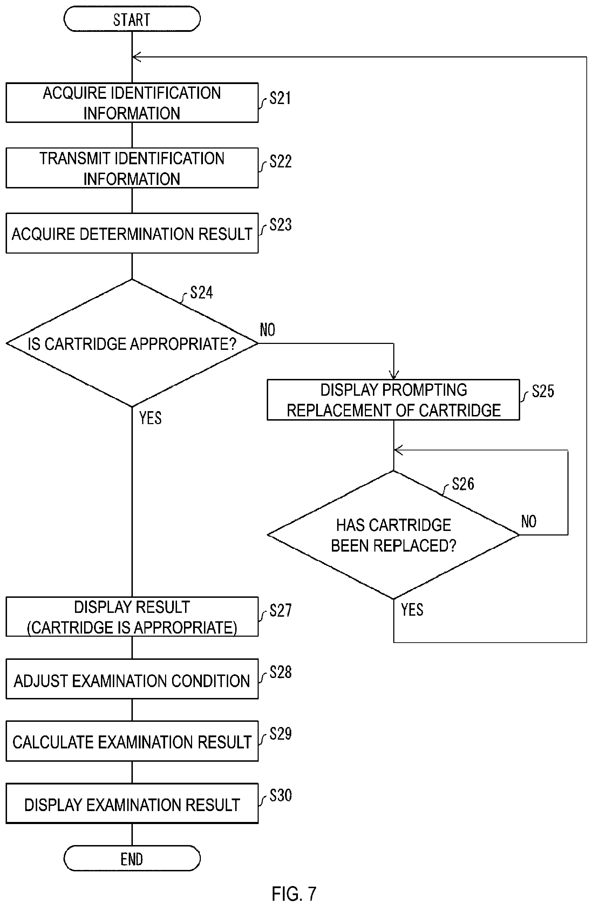

FIG. 7 is a flowchart showing an example of a flow of processing performed in the examination device 3A. First, when the cartridge 2 is connected to the examination device 3A, the information acquiring unit 37A acquires the identification information of the cartridge 2 via a connector 32 (S21) as in S1. The information acquiring unit 37A outputs the acquired examination information to the examination controller 38A and a calculation unit 39.

The information acquiring unit 37A transmits the identification information to the determination server 6 via the communicator 35 (S22). When the determiner 63 of the determination server 6 acquires the identification information, the determiner 63 refers to the database 64 and makes a determination regarding the suitability of the cartridge 2. The method of the determination is the same as or similar to the method performed by the examination controller 38 in S2, and thus the description of the method is omitted.

The determiner 63 makes the determination of the suitability of the cartridge 2 and then transmits the result of the determination to the examination device 3A. The output controller 41A acquires the result of the determination of the suitability of the cartridge 2 from the determination server 6 via the communicator 35 (S23). If the acquired result of the determination indicates that "the cartridge 2 is not appropriate" (NO in S24), the output controller 41A executes S25 and S26 as in S3 and S4. On the other hand, if the acquired result of the determination indicates that "the cartridge 2 is appropriate" (YES in S24), the output controller 41A executes S27 to S30 as in S5 to S8.

Effect of Examination System 1A

In another embodiment, the examination system 1A includes the determination server 6 that acquires identification information of the cartridge 2 from the examination device 3A via a communication network. The determination server 6 can determine the suitability of the cartridge 2 based on the identification information.

In the above configuration, the determination server 6 can determine the suitability of the cartridge 2 based on the identification information acquired from the examination device 3. When the determination server 6 is connected to a plurality of examination devices 3 via the Internet or the like, the determination server 6 can comprehensively manage the identification information of the cartridges 2 and detect misuse such as a use of an identification number used in one examination device 3 in another examination device 3.

Third Embodiment

Another embodiment of the present invention according to the present disclosure will be described below. Note that, for convenience of description, members having the same functions as the members described in the first embodiment are denoted by the same reference signs, and descriptions thereof will not be repeated.

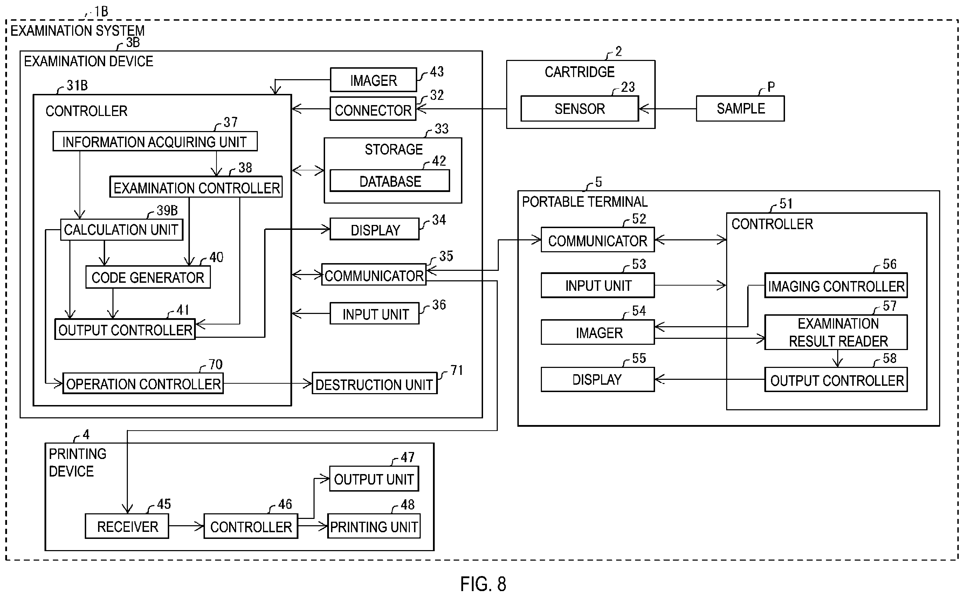

FIG. 8 is a block diagram illustrating a configuration of an examination system 1B according to the embodiment. The examination system 1B differs from the examination system 1 in that the examination system 1B includes an examination device 3B. As illustrated in FIG. 8, the examination device 3B includes a controller 31B including a calculation unit 39B, an operation controller 70, and a destruction unit 71, in addition to the configuration of the examination device 3. In the examination system 1B, after the calculation unit 39B calculates an examination result, a cartridge 2 used for the examination is destroyed.

The calculation unit 39B calculates the examination result in the same or similar manner as the calculation unit 39, and outputs the examination result to a code generator 40 and an output controller 41. At the same time as outputting the examination result, the calculation unit 39B outputs information indicating that the examination has been completed to the operation controller 70.

When the operation controller 70 acquires the information indicating that the examination has been completed from the calculation unit 39B, the operation controller 70 controls the destruction unit 71 to destroy the cartridge 2 connected to the examination device 3B.

The destruction unit 71 destroys the cartridge 2 in accordance with the control of the operation controller 70. A method by which the destruction unit 71 destroys the cartridge 2 is not limited. When the destroyed cartridge 2 is reconnected to the examination device 3B, the examination device 3B may not be able to perform examination using the cartridge 2. For example, the destruction unit 71 may destroy the cartridge 2 by folding the terminal of the cartridge 2 or making a hole in the terminal of the cartridge 2 so that the cartridge 2 cannot be physically connected to the examination device 3.

Alternatively, when the code containing the identification information is printed on the cartridge 2, the destruction unit 71 may make the code unreadable so that the examination device 3 cannot examine using the cartridge 2. For example, the destruction unit 71 may overwrite the code on the bar code with ink so that the code cannot be read. When the code is printed using ink that disappears with heat, the destruction unit 71 may be a heating unit that heats the code to erase the code.

Note that when a method is used in which it is not easy to visually confirm the cartridge 2 has been destroyed, the examination device 3 preferably adds information to the destroyed cartridge 2 so that it can be visually confirmed that the cartridge 2 has been destroyed. For example, the examination device 3 may print characters such as "used" on the destroyed cartridge 2.

Effect of Examination System 1B

In the examination system 1B according to the other embodiment, the destruction unit 71 destroys the cartridge 2 after the examination is completed. This can reduce the likelihood that the used cartridge 2 will be reused.

Fourth Embodiment

Another embodiment of the present invention according to the present disclosure will be described below.

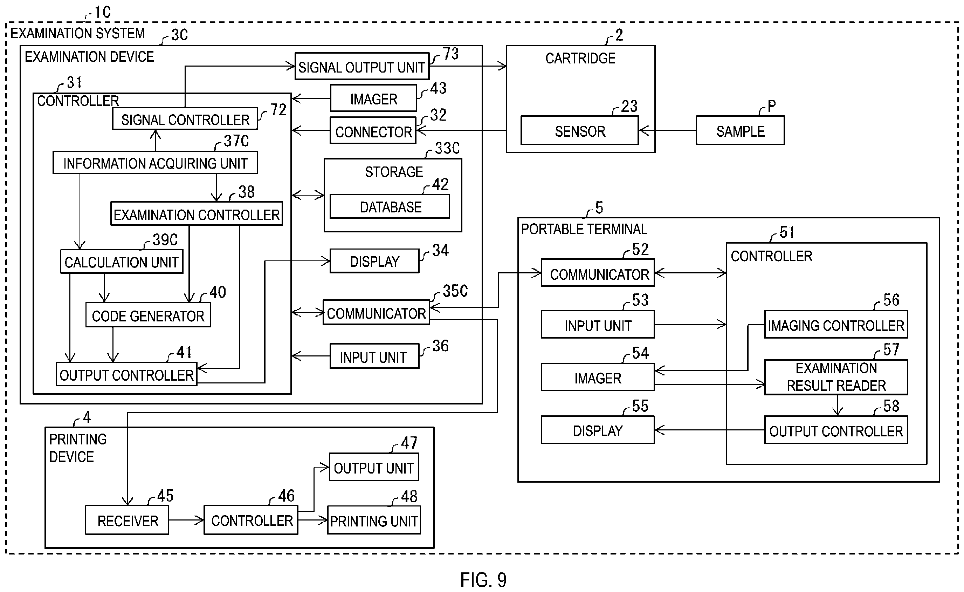

FIG. 9 is a block diagram illustrating a configuration of an examination system 1C according to the other embodiment. The examination system 1C differs from the examination system 1 of the first embodiment in that an examination device 3C includes a signal output unit 73, and a controller 31 includes a signal controller 72. An examination device of the examination system 1C is referred to as the examination device 3C.

In the examination system 1C, when a cartridge 2 is connected to the examination device 3C, the examination device 3C may specify measurement conditions of the examination device 3 based on identification information of the cartridge 2.

In a fourth embodiment, the identification information may include, as part of examination information, characteristic information that is information related to characteristics of a sensor 23 included in the cartridge 2. The characteristic information may include sensitivity information of the sensor 23, information of an electrical signal input to the sensor 23 (electrical signal information), or parameter information for analyzing an output value from the sensor 23. The electrical signal information may be, for example, information of a frequency (frequency information) of the electrical signal input to the sensor 23. The characteristic information is used to improve the accuracy of examination using the cartridge 2. The identification information may include product identification information. The product identification information may be, for example, a manufacturing number (serial number) of the cartridge 2 assigned to each cartridge 2. Alternatively, the product identification information may be a lot number assigned to each manufacturing lot of the cartridge 2.

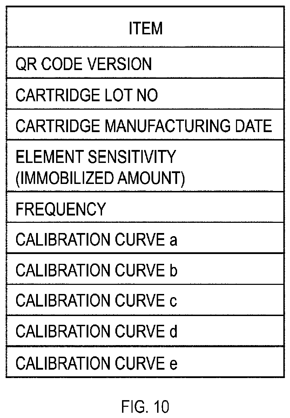

FIG. 10 is an example of a table showing items contained in the identification information of the cartridge 2. In the example shown in FIG. 10, the identification information contains element sensitivity (immobilized amount) indicating a sensitivity of the sensor 23 as the sensitivity information, a frequency of the electrical signal input to the sensor 23 as an example of the electrical signal information, and calibration curve parameters a to e as parameter information.

The frequency information is, for example, information indicating a frequency suitable for measurement by the cartridge 2. In the embodiment, the sensor 23 receives an electrical signal at one of the pair of first IDT electrodes 26A. As the frequency of the electrical signal input in the measurement by the sensor 23, it is advantageous to use a frequency having a smaller amplitude ratio (amplitude attenuation) of the output signal to the input signal. The frequency at which the amplitude attenuation is the smallest (optimal frequency) may vary for each sensor 23 or for each manufacturing lot of the sensor 23, for example, due to the physical or mechanical characteristics of the sensor 23. Thus, the frequency information contained in the identification information may be information indicating an optimal frequency for each sensor 23. By measuring using the optimal frequency, the examination system 1C can improve examination capabilities including examination accuracy or examination sensitivity.

Note that the electrical signal information may be information of an electrical signal, which is suitable for measurement by the cartridge 2 and is input to the sensor 23, and may be information other than the frequency information.

The parameter information is, for example, parameters for a calculation equation used by the examination device 3 to calculate the concentration of the examination subject from the output value of the sensor 23. In the embodiment, the examination device 3C (calculation unit 39C) acquires an electrical signal output from the sensor 23 and calculates a phase difference signal, which is a phase difference between the electrical signal output from the sensor 23 and the electrical signal input to the sensor 23. Then, for example, the concentration of the examination subject can be calculated as an examination result using the calculation equation (approximation function) shown in the equation (1) below. The phase difference signal may be obtained from the difference between the absolute phase of the electrical signal input to the sensor 23 and the absolute phase of the electrical signal output from the sensor 23. The calculation equation may be stored in a storage 33C.

Equation (1)

$$ y = \left( \left( \frac{(a-d)}{(x-d)} \right)^{\frac{1}{e}} - 1 \right)^{\frac{1}{b}} * c \qquad \cdots (1) $$

In the equation, x is a phase difference signal, y is a concentration, and the a to e are parameters. A suitable approximation function for use in calculating the concentration may vary for each sensor 23 or each manufacturing lot of the sensor 23. Thus, by substituting the values of the parameters a to e suitable for each sensor 23, an optimal approximation function can be obtained for each sensor 23. That is, by performing calculation using the parameters a to e specified for each sensor 23, a concentration with higher accuracy can be calculated.

The sensitivity information is, for example, information indicating the sensitivity of the sensor 23. Each individual sensor 23 or each manufacturing lot of the sensor 233 may have a different sensitivity to the electrical signal input thereto.

For example, consider a case where examination subjects having the same concentration are measured using two sensors 23 having similar calculation equations. The calculation equations are used to calculate the concentrations of the examination subjects from the output values of the sensors 23. When the sensitivities of the respective sensors 23 to the input electrical signal are different, different electrical signals are output from the respective sensors 23. Thus, the concentration as a result of the calculation using the phase difference signal calculated from the electrical signal is calculated differently for each sensor 23.

For example, the above equation (1) can be converted into the following equation (2). In the case of the sensors 23 having different sensitivities to the input electrical signal, the relationship between the phase difference signal and the concentration is expressed by the following equation (3). That is, since the concentration of the examination subject is obtained from the phase difference signal by the following equation (4) obtained by converting the following equation (3), the concentration of the examination subject is calculated differently from the above equation (1).

Equation (2)

$$ x = d + \frac{(a-d)}{\left( 1 + \left( \frac{y}{c} \right)^{b} \right)^{e}} \qquad \cdots (2) $$

Equation (3)

$$ x = \alpha * \left( d + \frac{(a-d)}{\left( 1 + \left( \frac{y}{c} \right)^{b} \right)^{e}} \right) \qquad \cdots (3) $$

Equation (4)

$$y = \left( \left( \frac{(\alpha * a - \alpha * d)}{(x - \alpha * d)} \right)^{\frac{1}{e}} - 1 \right)^{\frac{1}{b}} * c \qquad \cdots (4)$$

In the above equations (2) and (3), $\alpha$ is a sensitivity ratio, and x, y, and a to e are the same as in the above equation (1).

By using the sensitivity information to correct the parameters of the calculation equation used to calculate the concentration of the examination subject from the output value of the sensor 23, the concentration can be calculated more accurately. For example, the above equation (4) can be referred to as an equation in which the parameters a and d in the above equation (1) are corrected to $\alpha \times$ a and $\alpha \times$ d, respectively. Thus, by correcting the parameters a and d in the calculation equation to $\alpha \times$ a and $\alpha \times$ d, respectively, the concentration can be calculated accurately.

In the examination system 1C of the fourth embodiment, the signal controller 72 may specify the measurement conditions of the examination device 3 based on the identification information. For example, the signal controller 72 can use the frequency information contained in the identification information as the frequency of the electrical signal output to the sensor 23.

Once the signal controller 72 specifies the frequency, the signal controller 72 may output signal information indicating the frequency to the signal output unit 73. The signal output unit 73 may output an electrical signal to the cartridge 2 based on the signal information received from the signal controller 72.

In the examination system 1C of the fourth embodiment, the calculation unit 39C may specify the calculation equation suitable for the cartridge 2 by using the calculation equation (e.g., equation (1)) stored in the storage 33C and the parameter information contained in the identification information of the cartridge 2. In the present disclosure, specifying a calculation equation in this way is also included in the concept of specifying measurement conditions. The calculation unit 39C may then analyze the output value from the sensor 23 using the specified calculation equation.

When the calculation unit 39C acquires the electrical signal from the sensor 23, the calculation unit 39C may output the examination result calculated using the specified calculation equation to a code generator 40 and an output controller 41.

In the examination system 1C of the fourth embodiment, the calculation unit 39C may specify the sensitivity of the sensor 23 as one of the measurement conditions using the sensitivity information contained in the identification information of the cartridge 2, and correct the parameters of the calculation equation.

When the identification information of the cartridge 2 contains the sensitivity information, upon acquiring the electrical signal from the sensor 23, the calculation unit 39C corrects the parameters of the calculation equation using the specified sensitivity. The calculation unit 39C may then output the examination result calculated using the calculation equation in which the phase difference signal and the corrected parameters are substituted to the code generator 40 and the output controller 41.

Note that the signal controller 72 or the calculation unit 39C may specify the measurement conditions based on the product identification information contained in the identification information. Specifically, the signal controller 72 or the calculation unit 39C may acquire the measurement conditions corresponding to the product identification information, for example, via a communication network. In this case, the examination system 1C may include a determination server 6C (not illustrated) having the same or similar configuration as the determination server 6 described in the second embodiment (see FIG. 6). An information acquiring unit 37C may transmit the product identification information to the determination server 6C via a communicator 35C. The determination server 6C may specify measurement conditions corresponding to the product identification information, for example, by referring to a table showing the correspondence between the product identification information and the measurement conditions. The signal controller 72 can acquire the specified measurement conditions from the determination server 6C via the communicator 35C.

In the fourth embodiment, described is the aspect in which the examination device 3C specifies the measurement conditions of the examination device 3 based on the identification information of the cartridge 2 when the cartridge 2 is connected to the examination device 3C. However, the measurement conditions may be specified, for example, after the suitability of the cartridge is determined based on the identification information. Specifically, the measurement conditions may be specified, for example, in the step (S6) of adjusting the examination conditions in the flowchart shown in FIG. 4.

Effect of Examination System 1C

In the fourth embodiment, the examination system 1C includes the cartridge 2 to which the identification information is assigned, and the examination device 3C that acquires the identification information and performs an examination, and specifies the measurement conditions in the examination device 3C based on the identification information.
In the above configuration, the measurement conditions can be specified in accordance with the characteristics of the cartridge 2, thereby performing more accurate measurement.

Example of Software Implementation

A control block of each of the examination systems 1, 1A, and 1C (particularly information acquiring units 37, 37A, and 37C, examination controllers 38 and 38A, calculation unit 39, code generator 40, controller 46, examination result reader 57, and determiner 63) may be implemented by a logic circuit (hardware) formed in an integrated circuit (IC chip) or the like, or may be implemented by software.
In the latter case, each of the examination systems 1, 1A, and 1C may include a computer that executes instructions of a program, which is software that implements each function. The computer may include, for example, one or more processors and a computer-readable recording medium that stores the program. In the computer, the processor reads the program from the recording medium and executes the read program to achieve the object of the invention according to the present disclosure. As the processor, a central processing unit (CPU) can be used, for example. As the recording medium, a "non-transitory tangible medium" such as a read only memory (ROM), a tape, a disk, a card, a semiconductor memory, or a programmable logic circuit can be used. A random access memory (RAM) for developing the program may be further provided. The program may be supplied to the computer via any transmission medium (communication network, broadcast wave, etc.) capable of transmitting the program. Note that one aspect of the present disclosure may be implemented in the form of data signals embedded in a carrier wave in which the program is embodied by electronic transmission.
The invention according to the present disclosure has been described above based on the drawings and examples. However, the invention according to the present disclosure is not limited to each embodiment described above. That is, the invention according to the present disclosure can be modified in various ways within the scope indicated in the present disclosure, and an embodiment to be obtained by appropriately combining technical means disclosed in different embodiments is also included in the technical scope of the invention according to the present disclosure. In other words, note that a person skilled in the art can easily make various variations or modifications based on the present disclosure. Note that these variations or modifications are included within the scope of the present disclosure.
For example, in the above embodiments, described is the aspect in which the cartridge 2 includes the sensor 23 and the examination subject is detected by the cartridge 2. However, the invention according to the present disclosure is not limited thereto. For example, the sensor 23 may be included in the examination device 3. That is, the detection of the examination subject need only be performed by the examination device 3. In this case, the cartridge 2 is used for authentication.
For example, the cartridge 2 may be used for authentication for the examination device 3 to start the examination. In other words, for example, if the identification information assigned to the cartridge 2 and the identification information of the cartridge 2 possessed by the examination device 3 match, the examination device 3 may start the examination. For example, if these pieces of identification information do not match, the display 34 of the examination device 3 and/or the display 55 of the portable terminal 5 or the like may indicate that the cartridge 2 is not suitable.
For example, the cartridge 2 may be used not only to authenticate the examination device 3 to start the examination, but also to supply various liquids such as the sample P and a reagent used for the examination to the examination device 3. In other words, for example, if the identification information assigned to the cartridge 2 and the identification information of the cartridge 2 possessed by the examination device 3 match, the cartridge 2 may supply various liquids to the examination device 3, and the examination device 3 may start the examination.

REFERENCE SIGNS

1 Examination system
2 Cartridge
3 Examination device
4 Printing device
5 Portable terminal (mobile terminal)

6 Determination server (management device)
23 Sensor (measurement device)
31 Controller
32 Connector
34 Display (display device)
54 Imager
55 Display

**Claims**

1. An examination system comprising:

   a cartridge to which identification information is assigned; and
   an examination device configured to acquire the identification information and perform an examination, wherein
   a determination of suitability of the cartridge based on the identification information is made and an operation
   of the examination device according to a result of the determination is controlled.

2. The examination system according to claim 1, wherein
   the determination is made before starting the examination by controlling the operation of the examination device.

3. The examination system according to claim 1 or 2, wherein

   the cartridge comprises a sensor configured to detect an examination subject contained in a sample, and
   the determination is made before supplying the sample to the sensor by controlling the operation of the examination device.

4. The examination system according to any one of claims 1 to 3, wherein the examination device further comprises
   a program configured to make the determination.

5. The examination system according to any one of claims 1 to 4, further comprising:

   a management device configured to acquire the identification information from the examination device via the
   examination device and a communication network, wherein
   the management device further comprises a program configured to make the determination.

6. The examination system according to any one of claims 1 to 5, wherein

   the examination device comprises a display configured to display a result of the examination or a result of the
   determination, and
   the result of the examination or the result of the determination is displayed on the display.

7. The examination system according to any one of claims 1 to 6, further comprising:

   a display device comprising a display configured to display a result of the examination or a result of the determination, wherein
   the result of the examination or the result of the determination is displayed on the display comprised in the
   display device.

8. The examination system according to any one of claims 1 to 7, further comprising:
   a mobile terminal comprising a display configured to display a result of the examination or a result of the determination.

9. The examination system according to claim 8, wherein
   the examination device transmits the result of the determination to the mobile terminal.

10. The examination system according to claim 8 or 9, further comprising:

    a printing device configured to acquire the result of the examination from the examination device and print a code indicating the result of the examination on a medium, wherein
the mobile terminal further comprises an imager configured to read the code printed, and
the mobile terminal displays the result of the examination on the display comprised in the mobile terminal based on the code read by the imager.

11. The examination system according to any one of claims 1 to 10, wherein the identification information comprises product identification information of the cartridge, and
the determination is a determination of whether the cartridge is an appropriate product.

12. The examination system according to any one of claims 1 to 10, further comprising:

   a private key configured to decrypt encrypted information, wherein
   the identification information is encrypted, and
   in a determination of whether the cartridge is an appropriate product, whether the identification information is able to be decrypted by the private key is determined.

13. The examination system according to any one of claims 1 to 12, wherein the identification information comprises information regarding a type of the examination, and
the determination is a determination of whether the cartridge matches the type of the examination of the examination device.

14. The examination system according to any one of claims 1 to 13, wherein the identification information comprises information regarding an expiration date of the cartridge, and
the determination is a determination of whether the cartridge has expired.

15. A cartridge used in the examination system according to any one of claims 1 to 14, wherein

   specific information that specifies the examination device corresponding to the cartridge is assigned, and
   when the cartridge is used in the examination device corresponding to the specific information of the cartridge, the examination is initiated by the specific information assigned.

16. An examination method in an examination system comprising an examination device for performing an examination using a cartridge to which identification information is assigned, the examination method comprising:

   acquiring the identification information from the cartridge;
   making a determination regarding suitability of the cartridge based on the identification information; and
   controlling an operation of the examination device in accordance with a result of the determination.

17. The examination method according to claim 16, wherein
the making of a determination is performed before starting the examination in the controlling of an operation of the examination device.

18. An examination device for performing an examination using a cartridge to which identification information is assigned, the examination device comprising:

   a connector to be connected to the cartridge;
   a reader configured to read the identification information; and
   a controller configured to control an operation in accordance with a result of a determination of suitability of the cartridge based on the identification information.

19. The examination device according to claim 18, wherein
the determination is made before starting the examination.

20. The examination device according to claim 18 or 19, further comprising:

   a display configured to display information, wherein
   a result of the examination is displayed on the display.

**21.** An examination system comprising:

a cartridge to which identification information is assigned;
an examination device configured to acquire the identification information and perform an examination, wherein a measurement condition in the examination device is specified based on the identification information.

**22.** The examination system according to claim 21, wherein

the cartridge comprises a measurement device, and
an output value from the measurement device is analyzed using the identification information.

**23.** The examination system according to claim 21 or 22, wherein

the cartridge comprises a measurement device,
the identification information comprises sensitivity information indicating a sensitivity of the measurement device, and
an output value from the measurement device is corrected using the sensitivity information.

**24.** The examination system according to any one of claims 21 to 23, wherein a determination of suitability of the cartridge is made based on the identification information, and
an operation of the examination device is controlled according to a result of the determination.

**25.** The examination system according to any one of claims 21 to 24, wherein the identification information comprises product identification information, and the examination device acquires the measurement condition corresponding to the product identification information via a communication network.

**26.** An examination method in an examination system comprising an examination device for performing an examination using a cartridge to which identification information is assigned, the examination method comprising:

acquiring the identification information from the cartridge;
specifying a measurement condition in the examination device based on the identification information; and
controlling an operation of the examination device in accordance with the measurement condition.

**27.** An examination device for performing an examination using a cartridge to which identification information is assigned, the examination device comprising:

a connector to be connected to the cartridge,
a reader configured to read the identification information, and
a controller configured to control an operation in accordance with a measurement condition specified based on the identification information.

FIG. 1

FIG. 2

23

26A     24     26A

27

26B     25     26B

FIG. 3

START

ACQUIRE IDENTIFICATION
INFORMATION — S1

IS CARTRIDGE APPROPRIATE? — S2

NO → DISPLAY PROMPTING REPLACEMENT
OF CARTRIDGE — S3

HAS CARTRIDGE
BEEN REPLACED? — S4

NO

YES

YES

DISPLAY RESULT
(CARTRIDGE IS APPROPRIATE) — S5

ADJUST EXAMINATION CONDITION — S6

CALCULATE EXAMINATION RESULT — S7

DISPLAY EXAMINATION RESULT — S8

END

FIG. 4

START

CAPTURE IMAGE OF CODE    S11

READ EXAMINATION RESULT
INCLUDED IN CODE    S12

DISPLAY EXAMINATION RESULT    S13

END

FIG. 5

FIG. 6

FIG. 7

FIG. 8

EP 4 130 750 A1

FIG. 9

EXAMINATION SYSTEM 1C

EXAMINATION DEVICE 3C

CARTRIDGE 2
- SENSOR 23
- SAMPLE P

CONTROLLER 31
- SIGNAL OUTPUT UNIT 73
- IMAGER 43
- CONNECTOR 32
- STORAGE 33C
  - DATABASE 42
- DISPLAY 34
- COMMUNICATOR 35C
- INPUT UNIT 36
- SIGNAL CONTROLLER 72
- INFORMATION ACQUIRING UNIT 37C
- EXAMINATION CONTROLLER 38
- CALCULATION UNIT 39C
- CODE GENERATOR 40
- OUTPUT CONTROLLER 41

PORTABLE TERMINAL 5
- CONTROLLER 51
  - IMAGING CONTROLLER 56
  - EXAMINATION RESULT READER 57
  - OUTPUT CONTROLLER 58
- COMMUNICATOR 52
- INPUT UNIT 53
- IMAGER 54
- DISPLAY 55

PRINTING DEVICE 4
- RECEIVER 45
- CONTROLLER 46
- OUTPUT UNIT 47
- PRINTING UNIT 48

28

| ITEM |
| --- |
| QR CODE VERSION |
| CARTRIDGE LOT NO |
| CARTRIDGE MANUFACTURING DATE |
| ELEMENT SENSITIVITY (IMMOBILIZED AMOUNT) |
| FREQUENCY |
| CALIBRATION CURVE a |
| CALIBRATION CURVE b |
| CALIBRATION CURVE c |
| CALIBRATION CURVE d |
| CALIBRATION CURVE e |

FIG. 10

## INTERNATIONAL SEARCH REPORT

International application No.

PCT/JP2021/002796

### A. CLASSIFICATION OF SUBJECT MATTER
Int. Cl. G01N35/02(2006.01)i
FI: G01N35/02 C

According to International Patent Classification (IPC) or to both national classification and IPC

### B. FIELDS SEARCHED

Minimum documentation searched (classification system followed by classification symbols)
Int. Cl. G01N35/02

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2017-97543 A (SEIKO EPSON CORP.) 01 June 2017, | 21, 26-27 |
| Y | paragraphs [0020]-[0035], fig. 1-3, paragraphs [0020]-[0035], fig. 1-3 | 1-20, 22-25 |
| Y | JP 2019-100829 A (SYSMEX CORP.) 24 June 2019, paragraphs [0152]-[0154], fig. 8 | 1-20 |
| Y | JP 2020-34424 A (TDK CORP.) 05 March 2020, paragraphs [0010]-[0016], fig. 1 | 3-15, 22-25 |
| Y | JP 2019-101017 A (SYSMEX CORP.) 24 June 2019, paragraphs [0082]-[0090], fig. 10, 11 | 8-15 |

☐ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26.03.2021 | 06.04.2021 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2021/002796

| Patent Documents referred to in the Report | Publication Date | Patent Family | Publication Date |
|---|---|---|---|
| JP 2017-97543 A | 01.06.2017 | (Family: none) | |
| JP 2019-100829 A | 24.06.2019 | US 2019/0162670 A1 paragraphs [0190]-[0192], fig. 8 EP 3492904 A1 AU 2018271399 A CN 109856137 A | |
| JP 2020-34424 A | 05.03.2020 | (Family: none) | |
| JP 2019-101017 A | 24.06.2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013186097 A